(19) Europäisches Patentamt
European Patent Office
Office européen des brevets

(11) EP 4 556 526 A1

(12) **EUROPEAN PATENT APPLICATION**

(43) Date of publication:
**21.05.2025 Bulletin 2025/21**

(21) Application number: **23210723.5**

(22) Date of filing: **17.11.2023**

(51) International Patent Classification (IPC):
***C08L 69/00*** *(2006.01)*

(52) Cooperative Patent Classification (CPC):
(C-Sets available)
**C08L 69/00** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SHPP Global Technologies B.V.**
**4612 PX Bergen op Zoom (NL)**

(72) Inventors:
- **LI, Yuntao**
  **Mt. Vernon, 47620 (US)**
- **KYE, Daniel Kyungbin**
  **Mt. Vernon, 47620 (US)**

(74) Representative: **Modiano, Gabriella Diana et al**
**Modiano & Partners SA**
**Steinsdorfstraße 14**
**80538 München (DE)**

(54) **PFAS-FREE FLAME RETARDANT, IMPACT RESISTANT AND CHEMICAL RESISTANT POLYCARBONATE COMPOSITIONS**

(57) Compositions include: a. from 20 wt. % to 95 wt. % of a polycarbonate component comprising one or more of: i. a virgin polycarbonate homopolymer, and ii. a post-consumer recycled polycarbonate; b. from 1 wt. % to 20 wt. % of a polycarbonate-polysiloxane copolymer having a siloxane content of from about 30 wt. % to 70 wt. % present in an amount effective to provide 0.5 to 14 wt. % siloxane repeating units based on the total weight of the composition, and a weight average molecular weight of 26,000 to 50,000 grams per mole; and c. from 0.01 wt. % to 20 wt. % of a flame retardant additive. The flame retardant is free of or substantially free of halogen. A molded sample of the polycarbonate composition exhibits a UL-94 rating of V-0 at a thickness of 1.5 millimeters or less.

Table 1. Materials

| Item | Description |
|---|---|
| PC1 | Linear bisphenol A polycarbonate having a Mw of 20,000-22,000 g/mol determined by GPC using bisphenol A homopolycarbonate standards; high flow polycarbonate; as PC017. |
| PC2 | Linear bisphenol A polycarbonate having a Mw of 30,000-31,000 g/mol determined by GPC using bisphenol A homopolycarbonate standards; as PC023A. |
| PCR PC1 | Post-consumer recycled (PCR) bisphenol A polycarbonate having a melt flow rate of 12 to 16 g/10 mins (300°C, 1.2 kg) and a light transmittance of greater than 82% at a thickness of 3 mm, obtained as PC-116A. PC recycled from sheet and headlamp lenses source. |
| PCR PC2 | Optical quality (OQ) post-consumer recycled (PCR) bisphenol A polycarbonate having a melt flow rate of 65 g/10 mins (300°C, 1.2 kg) |
| PCR PC3 | Water bottle (WB) source post-consumer recycled (PCR) bisphenol A polycarbonate having a melt flow rate of 6 g/10 mins (300°C, 1.2 kg). |
| IM ABS | Acrylonitrile-butadiene-styrene impact modifier from bulk process, having 16 weight percent butadiene as ABS C29449. |
| IM ABS2 | Acrylonitrile-butadiene-styrene impact modifier from emulsion process, having 50 weight percent butadiene ABS C0360. |
| SAN | Styrene-Acrylonitrile resin from bulk process, having 28 weight percent acrylonitrile as SAN INP576. |
| IM MB | Methyl methacrylate-butadiene core-shell type impact modifier from Dow Chemical Co. as EXL2650A |
| PC-Silox1 | Polycarbonate-siloxane copolymer: 20% siloxane content (SABIC™ EXL-P) |
| PC-Silox2 | Polycarbonate-siloxane copolymer: 40% siloxane content (SABIC™) |
| PETS | Pentaerythritol Tetrastearate, PETS; mold release agent |
| AO1 | Antioxidant - hindered phenol antioxidant (Irganox™ 1076) |
| AO2 | Antioxidant - Tris(2,4-di-tert-butylphenyl) phosphite (TBPP); (obtained as IRGAFOS™ 168) |
| FR1 | bisphenol A bis(diphenyl phosphate) (BPADP) as Nagase product no. CR741 |
| FR2 | Phenoxycyclophosphazene (PPZ); obtained as RABITLE FP-110 |
| Drip | SAN encapsulated PTFE (TSAN) – intermediate resin as anti-drip agent |

**FIG. 1**

EP 4 556 526 A1

(52) Cooperative Patent Classification (CPC): (Cont.)

C-Sets
**C08L 69/00, C08K 5/0066, C08L 69/00,**
**C08L 83/10;**
**C08L 69/00, C08K 5/0066, C08L 83/10;**
**C08L 69/00, C08K 5/49, C08L 69/00, C08L 83/10;**
**C08L 69/00, C08K 5/49, C08L 83/10;**
**C08L 69/00, C08K 5/523, C08L 69/00,**
**C08L 83/10;**
**C08L 69/00, C08K 5/523, C08L 83/10**

## Description

### FIELD OF THE DISCLOSURE

The present disclosure relates to materials comprising polycarbonate compositions, and in particular to polycarbonate compositions exhibiting improved chemical resistance and processability while maintaining flame performance.

### BACKGROUND

Polycarbonate (PC) polymers are useful materials in the manufacture of articles and components for a wide range of applications. Because of their broad use, particularly in the electronics market, it is desirable to provide polycarbonate compositions with excellent physical, optical, and thermal properties in an adequate processing window. Such properties may be particularly difficult to achieve in thin-wall applications. Polycarbonate/acrylonitrile butadiene styrene (PC/ABS) blends are polycarbonate thermoplastic compositions that are widely used in electronics applications. Though generally resilient, these polycarbonate composition blends may also be susceptible to fracture or breakage upon exposure to various chemical media even at relatively low stress levels. In addition, more stringent regulations are being enacted to reduce or eliminate the presence of halogens, in particular fluorine, in end-products, and to encourage the use of more sustainable materials such as recycled PC.

Accordingly, there remains a need for thermoplastic compositions having improved chemical resistance, impact, and comparable FR performance without using halogen additives, which may also apply to compositions comprising higher loading of post-consumer recycled polycarbonates.

### SUMMARY

The above-described and other flame retardant art are met by polycarbonate compositions comprising: (a) from 20 wt. % to 95 wt. % of a polycarbonate component comprising one or more of (i) a virgin polycarbonate homopolymer, and (ii) a post-consumer recycled polycarbonate; (b) from 1 wt. % to 20 wt. % of a polycarbonate-polysiloxane copolymer having a siloxane content of from about 30 wt. % to 70 wt. % present in an amount effective to provide 0.5 to 14 wt. % siloxane repeating units based on the total weight of the composition, and a weight average molecular weight of 26,000 to 50,000 grams per mole, as determined by gel permeation chromatography using polystyrene standards and calculated for polycarbonate; and (c) from 0.01 wt. % to 20 wt. % of flame retardant additive, wherein the flame retardant is free of or substantially free of halogen. A molded sample of the polycarbonate composition exhibits a UL-94 rating of V-0 at a thickness of 1.5 millimeters or less.

The above described and other features are exemplified by the following detailed description, examples, and claims.

### BRIEF DESCRIPTION

The accompanying figure, which is incorporated in and constitutes a part of this specification, illustrate several aspects and together with the description service to explain the principles of the of the disclosure.

FIG. 1 presents Table 1 showing the materials used to prepare comparative and example formulations.
FIG. 2 presents Table 4 showing formulations C1.1 to C3.1and E1.1 to E3.3.
FIG. 3 presents Table 5 showing the properties and the applicable testing standards.
FIG. 4 presents Table 6 showing the criteria for flame retardant performance V-0.
FIG. 5 presents Table 7 showing the criteria for chemical resistance.

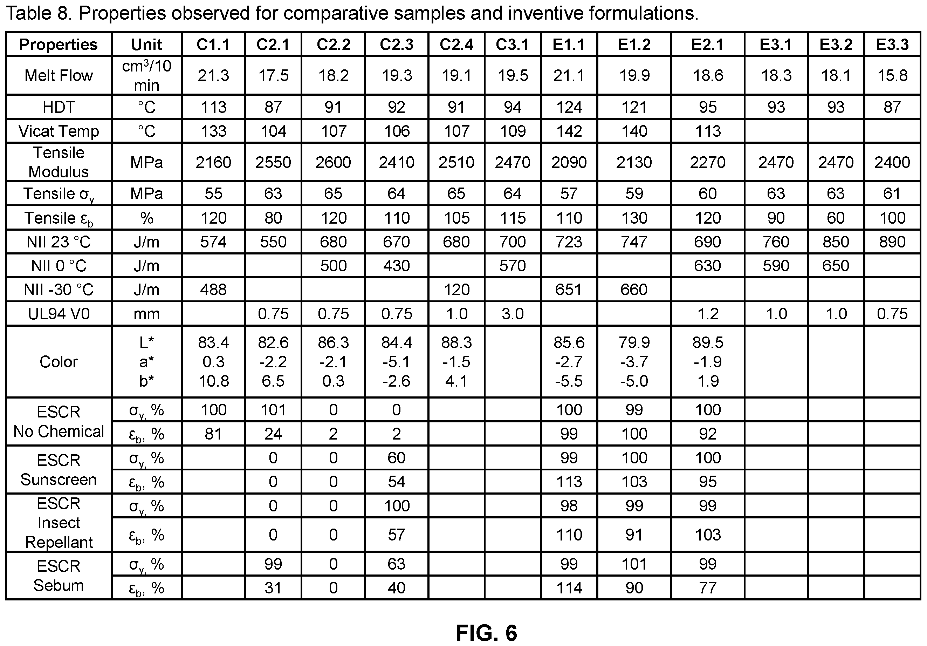

FIG. 6 presents Table 8 showing the observed properties for the comparative samples and example formulations of FIG. 2 (Table 4).

### DETAILED DESCRIPTION OF ILLUSTRATIVE ASPECTS

The present disclosure may be understood more readily by reference to the following detailed description of desired embodiments and the examples included therein. In the following specification and the claims that follow, reference will be made to a number of terms which have the following meanings. Also, within the scope of the disclosure are articles of manufacture prepared according to any of the methods described herein. For example, articles that can be produced using the materials and methods of the disclosure include those in the electrical field, for example, .

There accordingly remains a need in the art for flame retardant polycarbonate compositions suitable for thin-wall

applications. It would be a further advantage if the compositions were essentially halogen fluorine-free.

Polycarbonates are useful in the manufacture of articles and components for a wide range of applications, from automotive parts to electronic and electrical appliances. For example, polycarbonate blends comprising polycarbonate (PC) and acrylonitrile butadiene styrene (ABS) are widely used materials in the consumer electronics market including, but not limited to, TV frames, computer peripherals, mobile phone housings/cases, and device enclosures. Although these materials are generally durable, they are susceptible to catastrophic brittle failure at relatively low stress in certain environments and upon exposure to certain substances. To achieve thin-walled flame retardantV-0 performance typically required for the consumer electronics market, per- and polyfluoroalkyl substances (PFAS) are often added as an anti-dripping agent. These PFAS however face increasing global scrutiny for negative environmental impact. Further global concern on electronic product waste or "e-waste" and an emphasis on sustainability has also led to an increased desire for recycled plastics.

Post-Consumer Recycled (PCR) plastic resins are increasingly used in the production of consumer electronics, which has also increased the demand for PCR PC/ABS materials for the electronics industry. However, high loadings (namely, greater than 30 wt. %) of recycled content may reduce the mechanical integrity of the materials and ultimately make the blends more susceptible to environmental stress cracking and fatigue-related part failures.

Investigators have disclosed other PC formulations polycarbonate/ABS resins applications. U.S. Patent No. US 7,994,248 B2 discloses polycarbonate compositions exhibiting an improved combination of properties, particularly Vicat softening temperature and high flame retardance in thin wall applications.

Published U.S. Patent App. No. US 20130313493 A1discloses post-consumer recycled polycarbonate compositions hat can be lighter in weight and offer a balanced mechanical property including flame retardance.

U.S. Patent No. 9,018,286 B2 discloses flame retardant composition comprising a polycarbonate composition, an impact modifier, and a flame retardant (phosphazene). The compositions exhibit improved heat resistance, while maintaining good impact properties, flame retardance, ductility, and melt stability.

Published International Patent Application No. WO 2019123029 A1discloses compositions comprising a polycarbonate-polysiloxane copolymer exhibiting improved chemical resistance in blends with PC.

There have been other attempts to address polycarbonate compositions with improved flame performance, chemical resistance, and sufficient ductility. Published International Patent Application No. WO 2022107030 A1 discloses polycarbonate and polyester blend compositions exhibiting flame performance. Published International Patent Application No. WO 2022107029 A1 discloses combinations of polycarbonate and polyester that achieve chemical resistance and flame performance.

Compositions of the present disclosure overcome existing shortcomings of conventional PC/ABS materials. The disclosed formulations achieve - PFAS free flame retardant, improved impact and environmental stress cracking resistant solutions with other properties comparable to typical PC/ABS.

The disclosed compositions combine polycarbonates (either virgin or with PCR PC) were blended with BPADP (or other phosphorous FR agents such as PPZ) and a polycarbonate-siloxane copolymer to provide PFAS free flame performance and excellent chemical resistance while maintaining mechanical performance.

Aspects of the present disclosure may resolve many of the above-described technical limitations associated with flame retardant polycarbonate compositions, particularly flame retardant polycarbonate compositions comprising a post-consumer recycled polycarbonate polymer.

Compositions according to aspects of the disclosure exhibit improved properties as compared to conventional flame retardant polycarbonate compositions. As provided herein, improved properties include, but are not limited to, chemical resistance, mechanical properties such as impact strength, as well as colorability, and a UL-94 rating of V-0 at a thickness of 1.5 millimeters or less.

The disclosed compositions may comprise from about 20 wt. % to 95 wt. % of a polycarbonate component comprising one or more of: a virgin polycarbonate homopolymer, and a post-consumer recycled polycarbonate; from 1 wt. % to 20 wt. % of a polycarbonate-polysiloxane copolymer having a siloxane content of from about 30 wt. % to 70 wt. % present in an amount effective to provide 0.5 to 14 wt. % siloxane repeating units based on the total weight of the composition, and a weight average molecular weight of 26,000 to 50,000 grams per mole, as determined by gel permeation chromatography using polystyrene standards and calculated for polycarbonate; and from 0.01 wt. % to 20 wt. % of flame retardant additive, wherein the combined weight percent value of all components does not exceed 100 wt %, all weight percent values are based on the total weight of the composition.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting. Various combinations of elements of this disclosure are encompassed by this disclosure, for example, combinations of elements from dependent claims that depend upon the same independent claim.

Moreover, it is to be understood that unless otherwise expressly stated, it is in no way intended that any method

set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including matters of logic with respect to arrangement of steps or operational flow; plain meaning derived from grammatical organization or punctuation; and the number or type of embodiments described in the specification.

***Polycarbonate Compositions***

The polycarbonate compositions may comprise a polycarbonate component comprising i) a virgin polycarbonate homopolymer or i) a post-consumer recycled polycarbonate, a polycarbonate-polysiloxane copolymer, and a flame retardant additive. In certain aspects, the composition comprises from 20 wt. % to 95 wt. % of a polycarbonate component comprising one or more of: i) a virgin polycarbonate homopolymer and ii) a post-consumer recycled polycarbonate; from 1 wt. % to 20 wt. % of a polycarbonate-polysiloxane copolymer having a siloxane content of from about 30 wt. % to 70 wt. % present in an amount effective to provide 0.5 to 14 wt. % siloxane repeating units based on the total weight of the composition, and a weight average molecular weight of 26,000 to 50,000 grams per mole, as determined by gel permeation chromatography using polystyrene standards and calculated for polycarbonate; and from 0.01 wt. % to 20 wt. % of flame retardant additive, wherein the flame retardant is free of or substantially free of halogen, wherein the combined weight percent value of all components does not exceed 100 wt %, all weight percent values are based on the total weight of the composition. A molded sample comprising the polycarbonate composition exhibits a UL-94 rating of V-0 at a thickness of 1.5 millimeters or less. In further aspects, a molded sample of the composition may exhibit improved chemical resistance, as tested in accordance with ASTM D543, as compared to a reference composition that includes a fluoropolymer instead of thein the absence of the polycarbonate-polysiloxane copolymer having a siloxane content of from about 30 wt. % to 70 wt. %.

In yet further aspects, the disclosed composition combines a polycarbonate-polysiloxane copolymer, a flame retardant additive, and one or more of a virgin polycarbonate homopolymer and a post-consumer recycled polycarbonate. For example, the composition may comprise from 20 wt. % to 95 wt. % of a polycarbonate component comprising one or more of: a virgin polycarbonate homopolymer, and a post-consumer; recycled polycarbonate; from 1 wt. % to 20 wt. % of a polycarbonate-polysiloxane copolymer having a siloxane content of from about 30 wt. % to 70 wt. % present in an amount effective to provide 0.5 to 14 wt. % siloxane repeating units based on the total weight of the composition, and a weight average molecular weight of 26,000 to 50,000 grams per mole, as determined by gel permeation chromatography using polystyrene standards and calculated for polycarbonate; and from 0.01 wt. % to 20 wt. % of flame retardant additive, wherein the combined weight percent value of all components does not exceed 100 wt %, all weight percent values are based on the total weight of the composition. The polycarbonate composition may exhibit a UL-94 rating of V-0 at a thickness of 1.5 millimeters or less. In some examples, the polycarbonate composition may exhibit improved chemical resistance, as tested in accordance with ASTM D543, as compared to a reference composition in the absence of the polycarbonate-polysiloxane copolymer having a siloxane content of from about 30 wt. % to 70 wt. %.

The polycarbonate component may comprise a mixture of polycarbonate homopolymers or a mixture of PCR polycarbonate resins derived from multiple sources. In some aspects, the polycarbonate polysiloxane copolymer has a weight average molecular weight of 30,000 to 45,000 grams per mole, as determined by gel permeation chromatography using polystyrene standards and calculated for polycarbonate.

In In various aspects, the flame retardant additive is non-phosphorous based, organic, or inorganic or some combination thereof.

Compositions according to aspects of the disclosure have improved properties as compared to polycarbonate compositions comprising a PFAS flame retardant anti-drip agent or to polycarbonate compositions in the absence of the disclosed polycarbonate-polysiloxane copolymer having a siloxane content of from about 30 wt. % to 70 wt. %. Improved properties include, but are not limited to, chemical resistance, flame performance and colorability.

In certain aspects, a molded sample comprising the composition exhibits a UL-94 rating of V-0 at a thickness of 1.5 millimeters or less.

As the flame retardant additive is free of or substantially free of halogen, the polycarbonate may similarly be free of added halogen.

***Polycarbonate Component***

In various aspects, the disclosed polycarbonate composition comprises a polycarbonate component comprising one or more of a virgin polycarbonate polymer and a PCR polycarbonate polymer. As used herein, polycarbonate may define any polycarbonate material or mixture of materials, for example, as recited in U.S. Patent No. 7,786,246, which is hereby incorporated in its entirety for the specific purpose of disclosing various polycarbonate compositions and methods.

The term polycarbonate can be further defined as compositions having repeating structural units of the formula (1):

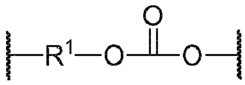 (1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S- -S(O) -, -S($O_2$) -, -C(O) -, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In various further aspects, "polycarbonates" and "polycarbonate resins" as used herein further defines homopolycarbonates (referred to herein as "polycarbonate homopolymers," having the same $R^1$), copolymers including different $R^1$ moieties in the carbonate (referred to herein as "copolycarbonates" or "polycarbonate copolymers"), copolymers including carbonate units and other types of polymer units, such as ester units, polysiloxane units, and combinations including at least one of polycarbonate homopolymers and polycarbonates copolymers. As used herein, "combination" is inclusive of blends, mixtures, alloys, reaction products, and the like.

In specific aspects, the disclosed polycarbonate composition comprises from about 20 wt. % to about 95 wt. % of a polycarbonate component. The polycarbonate component may be present in the composition in an amount of 20 weight percent to 99.5 weight percent (wt. %), based on the total weight of the composition. Within this range, the polycarbonate component may be present in an amount of 60 wt. % to 99.5 wt. %, or 65 wt. % to 99.5 wt. %, or 65 wt. % to 95 wt. %, or 70 wt. % to 95 wt. %, or 74 wt. % to 99 wt. %, or 75 wt. % to 95 wt. %, or 80 wt. % to 95 wt. %.The polycarbonate component may comprise one or more of i) a virgin polycarbonate homopolymer, and ii) a post-consumer recycled polycarbonate.

According to various aspects, the polycarbonate component may comprise a mixture of polycarbonate homopolymers. The polycarbonate component may comprise a polycarbonate homopolymer having a weight average molecular weight of at least 20,000 grams per mole (g/mol) as determined by gel permeation chromatography (GPC) using polystyrene standards and calculated for polycarbonate. For example, the polycarbonate homopolymer may have a weight average molecular weight of 20,000 grams per mole to 35,000 grams per mole. In yet further examples, the disclosed composition may comprise a first polycarbonate homopolymer having a weight average molecular weight of 19,000 to 25,000 grams per mole, as determined by gel permeation chromatography using polystyrene standards and calculated for polycarbonate; or a second polycarbonate homopolymer having a weight average molecular weight of 29,000 to 32,000 grams per mole, as determined by gel permeation chromatography using polystyrene standards and calculated for polycarbonate; or a combination thereof. A first polycarbonate homopolymer may have a molecular weight of from about 20,000 g/mol to 22,000 g/mol determined by GPC using BPA homopolycarbonate standards. A second polycarbonate homopolymer may have a molecular weight of from about 30,000 g/mol to 31,000 g/mol determined by GPC using BPA homopolycarbonate standards.

Virgin polycarbonate homopolymer may be present in the disclosed polycarbonate composition in an amount from about 20 wt. % to about 95 wt. %. Within this range, the PCR PC may be present in an amount of 20 wt. % to 85wt. %, or 20 wt. % to 80 wt. %, or 20 wt. % to 75 wt. %, or 20 wt. % to 70 wt. % based on the total weight of the polycarbonate composition.

As provided herein, the polycarbonate component may comprise post-consumer recycled polycarbonate. PCR PC may be reclaimed from post-consumer sources, including but not limited to, water bottles, home appliances waste for example TV, air-conditioners, washing machines, refrigerators, and the like. Virgin may refer to a polymer that has not been used in end-use parts, articles, or components. Regardless of the source, the PCR PC components may be similar or even identical to those virgin plastic components, known as impact modifier components, that are conventionally used in the manufacture of impact modified thermoplastic blend compositions. However, an important difference between virgin plastic components and recycled plastics utilized in the present compositions, is the presence of at least one impurity that is not present in a virgin material. For example, one or more additives conventionally used in the manufacture of impact modified thermoplastics can be present as an impurity. Additional impurities may include processing residues such as lubricants, mold release agents, antistatic agents, stabilizers, light stabilizers, flame retardants, metals (for example, iron, aluminum, and copper). Still further, the impurities can include polyurethane particles that cannot be fully removed during

the recycling process. In certain aspects, a PCR polycarbonate may be distinguished from a virgin polycarbonate by the inclusion of at least 10 mol% -OH endgroup content in the polycarbonate. In some aspects, the PCR polycarbonate includes from 10 mol% to 35 mol% -OH endgroup content in the polycarbonate.

In some aspects, the recycled PC may be clear or colored. Clear recycled PC may be sourced from, for example, water bottles, recycled PC sheets, automobile headlights, and optical discs (e.g., one or more of compact discs (CDs), digital versatile discs (DVDs) and Blue-ray discs). The PCR PC may be optical quality. A suitable source for colored PCR PC is water bottles. The polycarbonate component may comprise a mixture of post-consumer recycled polycarbonate from multiple sources. For example, the composition may comprise a PCR PC derived from water bottles and a PCR PC derived from CDs. In certain aspects the PCR PC may be transparent. For example, the polycarbonate composition may comprise a PCR PC derived from transparent plastic having a light transmittance of greater than 82% at a thickness of 3 mm as determined in accordance with ASTM D1003.

A PCR polycarbonate polymer may be present in the disclosed polycarbonate composition in an amount from about 20 wt. % to about 95 wt. %. Within this range, the PCR PC may be present in an amount of 20 wt. % to 85wt. %, or 20 wt. % to 80 wt. %, or 20 wt. % to 75 wt. %, or 20 wt. % to 70 wt. % based on the total weight of the polycarbonate composition.

***Polycarbonate-Polysiloxane Copolymer***

In various aspects, the disclosed polycarbonate compositions may further comprise a polycarbonate-siloxane block copolymer. Non-limiting examples of polysiloxane-polycarbonate copolymers can include various copolymers available from SABIC™. As used herein, the term polycarbonate-siloxane copolymer may refer to LEXAN™ EXL-polycarbonate resin or LEXAN™ resin (commercially available from SABIC™) according to the content of siloxane in the polycarbonate polysiloxane copolymer.

Polycarbonate polysiloxane copolymers may be useful polycarbonate copolymers and may include 50 wt. % to 99 wt. % of carbonate units and 1 wt. % to 70 wt. % siloxane units. Within this range, in some aspects, the polyorganosiloxane-polycarbonate copolymer can include 70 wt. %, to 98 wt. %, more specifically 75 wt. % to 97 wt. % of carbonate units and 2 wt. % to 30 wt. %, more specifically 3 wt. % to 25 wt. % siloxane units. Within this range, in other aspects, the polyorganosiloxane-polycarbonate copolymer can include 30 wt. %, to 70 wt. %, more specifically 35 wt. % to 65 wt. % of carbonate units and 30 wt. % to 70 wt. %, more specifically 35 wt. % to 65 wt. % siloxane units.

In specific aspects, the polycarbonate polysiloxane copolymer has a siloxane content of from about 30 wt. % to 70 wt. % present in an amount effective to provide 0.5 to 14 wt. % siloxane repeating units based on the total weight of the composition. The disclosed polycarbonate polysiloxane copolymer having a siloxane content of from about 30 wt. % to 70 wt. % may have a weight average molecular weight of 26,000 to 50,000 grams per mole, as determined by gel permeation chromatography using polystyrene standards and calculated for polycarbonate. In yet further examples, the polycarbonate-polysiloxane copolymer having a siloxane content of from 30 wt. % to 70 wt. % has a weight average molecular weight of 30,000 to 45,000 grams per mole, as determined by gel permeation chromatography using polystyrene standards and calculated for polycarbonate. In specific aspects, the polycarbonate polysiloxane copolymer has a siloxane content of from about 30 wt. % to 70 wt. %, or from 30 wt. % to 50 wt. %, present in an amount effective to provide 0.5 to 14 wt. % siloxane repeating units based on the total weight of the composition.

In various aspects, the polycarbonate composition may comprise a polycarbonate polysiloxane copolymer having 40 % by weight polysiloxane content based upon the total weight of the polysiloxane-polycarbonate copolymer. In various aspects, the 40 % by weight polysiloxane block copolymer may have a weight average molecular weight (Mw) of from about 26,000 to 50,000 g/mol as determined by gel permeation chromatography using polystyrene standards and calculated for polycarbonate.

In some aspects, polycarbonate further comprises a polysiloxane-polycarbonate copolymer having a siloxane content of from about 0.5 wt. % to about 30 wt. %. The polycarbonate-polysiloxane copolymer having a siloxane content of from about 0.5 wt. % to about 30 wt. % present in an amount effective to provide 1 to 25 wt. % siloxane repeating units based on the total weight of the composition. The additional loading of a further polycarbonate polysiloxane copolymer having a siloxane content of from about 0.5 wt. % to about 30 wt. % may contribute no more than about 10 wt. % siloxane units. Accordingly, in some aspects, the overall siloxane content in the polycarbonate composition comprising a polysiloxane-polycarbonate copolymer having a siloxane content of from about 30 wt. % to about 70 wt. % and further comprising a polysiloxane-polycarbonate copolymer having a siloxane content of from about 0.5 wt. % to 30 wt. % may not exceed 20 wt. % or 14 wt. %.

In one example, the polycarbonate composition may further comprise a polycarbonate polysiloxane copolymer having 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 $cm^3$/10 min at 300 °C /1.2 kg (see C9030T, a 6 % by weight polysiloxane content

copolymer available from SABIC™ as "transparent" EXL C9030T resin polymer). In another example, the polysiloxane-polycarbonate block can include 20 % by weight polysiloxane based upon the total weight of the polysiloxane block copolymer. In a further example, an additional appropriate polysiloxane-polycarbonate copolymer may be a bisphenol A polysiloxane-polycarbonate copolymer end-capped with para-cumyl phenol (PCP) and having a 20 % polysiloxane content (commercially available from SABIC as the "opaque" EXL or C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20% polysiloxane block copolymer can have a melt volume rate (MVR) at 300 °C/1.2 kg of 7 $cm^3$/ 10 min and can exhibit siloxane domains sized in a range of from about 5 micron to about 20 micrometers (microns, $\mu$m).

Representative polycarbonate-siloxane copolymers include those exemplified within this specification. In some aspects, two or more polycarbonate-siloxane copolymers may be used. For example, in some aspects, blends of end-capped and hydroxy terminated materials may be used. In other aspects, blends of similar chemistries having different proportions of siloxane may also be used. The polycarbonate composition may further comprises a polycarbonate homopolymer or a polycarbonate copolymer different from the polycarbonate-polysiloxane copolymer.

The disclosed polycarbonate-siloxane copolymer block copolymers can also be end-capped. For example, according to aspects of the disclosure, a polycarbonate-siloxane copolymer block copolymer can be end capped with p-cumyl-phenol.

Notably, better mechanical performance may be achieved with a greater amount of polycarbonate-siloxane copolymer having a siloxane content of from about 30 wt. % to 70 wt. %. In certain aspects, the thermoplastic composition may comprise from about 1 wt. % to about 20 wt. % of a polycarbonate-polysiloxane copolymer, or from about 0.01 wt. % to about 60 wt. %, or from about 0.01 wt. % to about 55 wt. %, or from about 1 wt. % to about 60 wt. %, or from about 5 wt. % to about 60 wt. %, or from about 10 wt. % to about 60 wt. %, or from about 1 wt. % to about 50 wt. %, or from about 5 wt. % to about 50 wt. %, or from about 10 wt. % to about 50 wt. % of polycarbonate-polysiloxane copolymer based on the total weight of the composition.

***Flame retardant additive***

In various aspects, the disclosed composition may comprise a flame retardant additive. According to various aspects, the flame retardant additive may be phosphorous based or non-phosphorous based, inorganic or organic, or some combination thereof. Useful flame retardants further include organic compounds that include phosphorus such as organic phosphates and organic compounds containing phosphorus-nitrogen bonds.

Various types of flame retardants may be utilized as additives. In one aspect, the flame retardant additives include, for example, flame retardant salts such as alkali metal salts of perfluorinated $C_1$-$C_{16}$ alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as $Na_2CO_3$, $K_2CO_3$, $MgCO_3$, $CaCO_3$, and $BaCO_3$ or fluoro-anion complex such as $Li_3AlF_6$, $BaSiF_6$, $KBF_4$, $K_3AlF_6$, $KAlF_4$, $K_2SiF_6$, and/or $Na_3AlF_6$ or the like. Rimar salt and KSS and NATS, alone or in combination with other flame retardants, are particularly useful in the compositions disclosed herein. In certain aspects, the flame retardant does not contain a halogen such as bromine or chlorine.

In further aspects, the flame retardant additive or a portion thereof comprises an organic phosphate and/or an organic compound containing a phosphorus-nitrogen bond. In one aspect, suitable flame retardant compounds containing phosphorus-nitrogen bonds include phosphonitrilic chloride, phosphorus ester amides, phosphoric acid amides, phosphonic acid amides, phosphinic acid amides, tris(aziridinyl)phosphine oxide. In further other aspects, the flame retardant can comprise a mixture of two or more individual flame retardant compositions.

A suitable organic phosphate is an aromatic phosphate of the formula $(GO)_3P=O$, wherein each G is independently an alkyl, cycloalkyl, aryl, alkylaryl, or aralkyl group, provided that at least one G is an aromatic group. Two of the G groups can be joined together to provide a cyclic group, for example, diphenyl pentaerythritol diphosphate. Exemplary aromatic phosphates include, phenyl bis(dodecyl)phosphate, phenyl bis(neopentyl)phosphate, phenyl bis(3,5,5'-trimethylhexyl)phosphate, ethyl diphenyl phosphate, 2-ethylhexyl di(p-tolyl)phosphate, bis(2-ethylhexyl)p-tolyl phosphate, tritolyl phosphate, bis(2-ethylhexyl)phenyl phosphate, tri(nonylphenyl)phosphate, bis(dodecyl)p-tolyl phosphate, dibutyl phenyl phosphate, 2-chloroethyl diphenyl phosphate, p-tolyl bis(2,5,5'-trimethylhexyl)phosphate, 2-ethylhexyl diphenyl phosphate, or the like.

In some aspects, the flame retardant additive may comprise an oligomer organophosphorous flame retardant,

including for example, bisphenol A diphenyl phosphate (BPADP). In a further example, the flame retardant can be selected from oligomeric phosphate, polymeric phosphate, oligomeric phosphonate, ammonium polyphosphate (Exolit OP) or mixed phosphate/phosphonate ester flame retardant compositions. The flame retardant can be selected from triphenyl phosphate; cresyldiphenylphosphate; tri(isopropylphenyl)phosphate; resorcinol bis(diphenylphosphate); and bisphenol-A bis(diphenyl phosphate). As an example,, the flame retardant may comprise bisphenol A bis(diphenyl phosphate) (BPADP).

Inorganic flame retardants can also be used, for example salts of C1-16 alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as $Na_2CO_3$, $K_2CO_3$, $MgCO_3$, $CaCO_3$, and $BaCO_3$, or fluoro-anion complexes such as $Li_3AlF_6$, $BaSiF_6$, $KBF_4$, $K_3AlF_6$, $KAlF_4$, $K_2SiF_6$, and/or $Na_3AlF_6$. When present, inorganic flame retardant salts are present in amounts of 0.01 to 10 parts by weight, more specifically 0.02 to 1 parts by weight, based on 100 parts by weight of the total composition, excluding any filler.

In various aspects, the flame retardant additive may be present in amounts of from about 10 wt. % to about 25 wt. % of the total composition, or from about 10 wt. % to about 15 wt. %. As a further example, the composition may comprise from about 0.5 wt. % to about 20 wt. % of a phosphazene-based flame retardant. In some examples, the composition may comprise from about 0.5 wt. % to about 20 wt. %, from about 0.5 wt. % to about 15 wt. %, from about 0.5 wt. % to about 12 wt. %, from about 3 wt. % to about 15 wt. %, from about 1 wt. % to about 10 wt. %, from about 1 wt. % to about 12 wt. %, or from about 3 wt. % to about 10 wt. % of a flame retardant. For example, a BPADP flame retardant additive may be present in an amount from about 0.5 wt. % to about 20 wt. % relative to the total weight of the composition.

As provided herein, the flame retardant additive is non-halogenated or may be considered free of or substantially free of halogen or added halogen. The disclosed polycarbonate compositions may have a UL-94 flame test rating of V-0 at a thickness of 1.5 mm or thinner and be considered "essentially halogen-free" "substantially free of halogen" or "halogen free" per IEC 61249-2-21 or UL 746H. As used herein, the phrase "essentially halogen-free" is as defined by IEC 61249-2-21 or UL 746H. According to International Electrochemical Commission, Restriction Use of Halogen (IEC 61249-2-21), a composition should include 900 parts per million (ppm) or less of each of chlorine and bromine and also include 1500 ppm or less of total bromine, chlorine, and fluorine content. According to UL 746H, a composition should include 900 ppm or less of each of chlorine, bromine, and fluorine and 1500 ppm or less of the total chlorine, bromine, and fluorine content.

Accordingly, the disclosed composition may exhibit a calculated added bromine and added chlorine content that are each about 900 ppm or less and the calculated total added bromine, added chlorine, and added fluorine content of the polycarbonate composition that is about 1500 ppm or less. In further aspects, the calculated added bromine, added chlorine, and added fluorine content of the polycarbonate composition may each about 900 ppm or less and the calculated total added bromine, added chlorine, and added fluorine content of the polycarbonate composition may be about 1500 ppm or less. In specific aspects, the polycarbonate composition comprises 1000 ppm or less of added fluorine based on the total content of the composition.

***Impact Modifier***

The compositions of the present disclosure may comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the Izod impact) are improved. In some examples, the chemically reactive impact modifier may be an ethylene or propylene-based homo- or copolymer with reactive functional groups selected from, but not limited to, anhydride, carboxyl, hydroxyl, and epoxy. In other examples, the chemically reactive impact modifier can be a unhydrogenated or hydrogenated styrenic block copolymer grafted with reactive functional groups including, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (Tg) can be less than -5° C, -10° C, - 15° C, with a Tg of less than -30° C typically providing better performance. Representative rubbery impact modifiers can include, for example, functionalized polyolefin ethylene-acrylate terpolymers, such as ethylene-acrylic esters- maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain functional moieties which are grafted onto the polymer in a post polymerization step.

In various aspects, the impact modifier may comprise a block copolymer grafted with at least one functional group. These functional groups may include, but are not limited to, carboxylic acid, anhydride, glycidyl group and their derivatives. In certain aspects, the impact modifier comprises a styrenic block copolymer. For example, the block

copolymer may comprise a styrene-based block copolymer such as a styrene-butadiene-styrene (SBS) copolymer, styrene-ethylene-butadiene-styrene (SEBS) copolymer, styrene-isoprene-styrene (SIS) copolymer, styrene ethylene-propylene-styrene (SEPS) copolymer, or styrene-[ethylene-(ethylene-propylene)]-styrene (SEEPS) or a combination thereof.

In certain examples, the resin composition disclosed herein includes from 0.01 wt. % to 15 wt. %, or from about 0.1 wt. % to about 15 wt. % of an impact modifier. In other examples, the resin composite includes from 0.1 wt. % to 12 wt. % of the impact modifier, or from 0.1 wt. % to 10 wt. % of the impact modifier, the resin composite includes from about 0.1 wt. % to about 8 wt. % of the impact modifier, or from about 2 wt. % to about 12 wt. % of the impact modifier, or from about 3 wt. % to about 10 wt. % of the impact modifier, or from about 2 wt. % to about 10 wt. % of the impact modifier, or even from about 2 wt. % to about 8 wt. % of the impact modifier.

***Additives***

The composition can include various additives ordinarily incorporated into polymer compositions of this type, with the proviso that the additive(s) are selected so as to not significantly adversely affect the desired properties of the thermoplastic composition (good compatibility for example). Such additives can be mixed at a suitable time during the mixing of the components for forming the composition. The total amount of all of the additives in the resin composition can be, for example, 0.001 to 12 wt. % each based on the total weight of the composition. Suitable additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

In certain aspects, the disclosed compositions may comprise an anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. Anti-drip agents can be used in amounts of 0.1 to 10 parts by weight, based on 100 parts by weight of the total composition, excluding any filler.

According to certain aspects, the polymer compositions may maintain mechanical performance and dielectric strength even with high levels of fillers (for example, greater than 30 wt. % filler based on the total weight of the polymer composition).

The composite disclosed herein can comprise one or more additional fillers. The filler can be selected to impart additional impact strength and/or provide additional characteristics that can be based on the final selected characteristics of the polymer composition. In certain aspects, the composite may comprise a glass fiber filler. In yet further aspects, the composite may be free or substantially free of a glass filler.

Additional appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, titanium dioxide, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated, or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In specific aspects, the additive may comprise an inorganic filler such as titanium dioxide, a titanate, or a combination thereof. As an example, the composition may comprise from about 0.01 wt. % to about 50 wt. % of a titanium oxide, a titanate, or a combination thereof.

The additive composition may include a reinforcing agent, antioxidant, heat stabilizer, light stabilizer, ultraviolet light stabilizer, ultraviolet absorbing additive, plasticizer, lubricant, release agent, antistatic agent, anti-fog agent, antimicrobial agent, chain extender, colorant, de-molding agents, surface effect additive, radiation stabilizer, flame retardant, anti-drip agent, or any combination thereof.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-t-butylphenyl) phosphate available as IRGAPHOS™ 168. Heat stabilizers are generally used in amounts of 0.01 to 5 wt. %, based on the total weight of polymer in the composition.

There is considerable overlap among plasticizers, lubricants, and mold release agents, which include, for example, glycerol tristearate (GTS), phthalic acid esters (e.g., octyl-4,5-epoxyhexahydrophthalate), tris-(octoxycarbonylethyl)isocyanurate, tristearin, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); esters, for example, fatty acid esters (e.g., alkyl stearyl esters, such as, methyl stearate, stearyl stearate, and the like), waxes (e.g., beeswax, montan wax, paraffin wax, or the like), or combinations comprising at least one of the foregoing plasticizers, lubricants, and mold release agents. These are generally used in amounts of 0.01 to 5 wt. %, based on the total weight of the polymer in the composition.

Light stabilizers, in particular ultraviolet light (UV) absorbing additives, also referred to as UV stabilizers, include hydroxybenzophenones (e.g., 2-hydroxy-4-n-octoxy benzophenone), hydroxybenzotriazines, cyanoacrylates, oxanilides, benzoxazinones (e.g., 2,2'-(1,4-phenylene)bis(4H-3,1-benzoxazin-4-one, commercially available under the trade name CYASORB™ UV-3638 from Cytec Industries Inc., Woodland, NJ), aryl salicylates, hydroxybenzotriazoles (e.g., 2-(2-hydroxy-5-methylphenyl)benzotriazole, 2-(2-hydroxy-5-tert-octylphenyl)benzotriazole, and 2-(2H-benzotriazol-2-yl)-4-(1,1,3,3-tetramethylbutyl)-phenol, commercially available under the trade name CYASORB™ 5411 from Cytec Industries Inc., Woodland, NJ) or combinations comprising at least one of the foregoing light stabilizers. The UV stabilizers can be present in an amount of 0.01 to 1 wt. %, specifically, 0.1 to 0.5 wt. %, and more specifically, 0.15 to 0.4 wt. %, based upon the total weight of polymer in the composition.

Antioxidant additives include organophosphites such as tris(nonyl phenyl)phosphite, tris(2,4-di-t-butylphenyl) phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01 to 0.1 parts by weight, based on 100 parts by weight of the total composition, excluding any filler.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

The compositions may be formed by techniques known to those skilled in the art. Extrusion and mixing techniques, for example, may be utilized to combine the components of the resin composition.

The resin compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230 °C and about 350 °C in the molten resin composition, although higher temperatures can be used provided that the residence time of the resin in the processing equipment is kept short. In some aspects, the melt processed composition exits processing equipment such as an extruder through small exit holes in a die. The resulting strands of molten resin are cooled by passing the strands through a water bath. The cooled strands can be chopped into small pellets for packaging and further handling.

Compositions may be manufactured by various methods, including batch or continuous techniques that employ kneaders, extruders, mixers, and the like. For example, the composition can be formed as a melt blend employing a twin-screw extruder. In some aspects, at least some of the components are added sequentially. For example, the poly(arylene ether) component, the polystyrene component(s), and the impact modifier component can be added to the extruder at the feed throat or in feeding sections adjacent to the feed throat, or in feeding sections adjacent to the feed throat, while the filler component can be added to the extruder in a subsequent feeding section downstream. Alternatively, the sequential addition of the components may be accomplished through multiple extrusions. A composition may be made by pre-extrusion of selected components, such as the poly(arylene ether) component, the polystyrene component(s), and the

impact modifier component to produce a pelletized mixture. A second extrusion can then be employed to combine the pre-extruded components with the remaining components. The filler component can be added as part of a masterbatch or directly. The extruder can be a two lobe or three lobe twin screw extruder. According to various aspects, the disclosed compositions may be prepared by compounding on a twin-screw extruder. Materials may be blended together and fed by the main feeder. Extruded strands of the composition may be processed into pellets and dried for further molding and evaluation. The testing was conducted on pellets and molded parts.

In one aspect, the present disclosure pertains to plastic components, for example, that have been shaped, formed, or molded at least in part from the compositions described herein. Also provided are plastic components comprising a resin composition that is formed according to the presently disclosed methods for forming a resin composition.

**Methods of Manufacture**

Aspects of the disclosure further relate to methods for making a thermoplastic composition. The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy. The barrel temperature on the extruder during compounding can be set at the temperature where at least a portion of the polymer has reached a temperature greater than or equal to about the melting temperature, if the resin is a semi-crystalline organic polymer, or the flow point (for example, the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects, the melt processed composition exits processing equipment such as an extruder through small exit holes in a die. The resulting strands of molten resin may be cooled by passing the strands through a water bath. The cooled strands can be chopped into pellets for packaging and further handling.

In certain aspects, the blends may be processed using a clean compound solution where the materials are compounded in deionized water.

Methods may further comprise processing the composite to provide a plaque of a desired thickness. Plaques can be extruded, injection molded, compression molded, or injection-compression molded, and may have a thickness between about 0.4 mm and 6 mm. Other processes could also be applied to the thin thermoplastic film, including but not limited to, lamination, co-extrusion, thermo-forming or hot pressing. In such aspects, further layers of other materials (for example, other thermoplastic polymer layers, metallic layers, etc.) could be combined with the composite.

***Properties and Articles***

As TSAN and other per- and polyfluoroalkyl substances (PFAS) face global environmental scrutiny, the addition of TSAN to improve conventional FR materials for electronic market applications is less desirable. Moreover, with growing concerns of e-waste, consumer electronic industry demand continues to trend toward the inclusion of more recycled materials such as PCR PC. Recycled materials including PCR PC however are plagued by colorability concerns and mechanical failure at higher recycled content loadings. Classical PC/ABS used in this industry is considered resilient, however these materials may become brittle when exposed to certain environments or chemical media at low stress. Consumer electronics are often exposed to skin oils (like moisturizer or sebum), sunscreen, and other cosmetics such as moisturizer or insect repellant, which can contribute to catastrophic brittle fracture of a polymer over time with exposure.

The disclosed polycarbonate compositions may overcome the shortcomings associated with some PC/ABS (and other PC compositions) that experience sudden breakage or fracture (brittle failure) at relatively low stress levels with exposure to certain chemical environments or media. Conventionally, ABS may be used as an impact modifier and flow enhancer for PC/ABS blends. Compositions of the present disclosure incorporating a polycarbonate polysiloxane copolymer having from 30 wt. % to 70 wt. % siloxane units may exhibit similar melt characteristics (lower processing temperature than PC) compared with PC/ABS blends. However, the disclosed compositions having a polycarbonate polysiloxane copolymer having from 30 wt. % to 70 wt. % siloxane units, rather than an ABS impact modifier, may exhibit better impact performance and chemical resistance compared to conventional PC/ABS formulations.

The disclosed compositions may also exhibit desirable flame retardant performance for electrical applications. The disclosed compositions may exhibit sufficient thin-walled flame retardant performance with our without fluoropolymer anti-drip agents such as (per- and polyfluoroalkyl substances (PFAS)). And, with growing global concerns on environmental waste and an emphasis on sustainability, the disclosed polycarbonate compositions may include higher loadings of post-consumer recycled PC without sacrificing colorability, mechanical, or flame performance.

Compositions of the present disclosure may exhibit PFAS free flame retardant performance, impact resistance and environmental stress cracking resistance with balanced properties of processibility and colorability.

In various aspects, the disclosed polycarbonate compositions exhibit improved environmental stress-cracking chemical resistance (ESCR) performance when tested in accordance with ASTM D543 for sunscreen, insect repellant, and sebum as chemical media. The disclosed compositions achieve at least 90 % tensile yield strength $\sigma_y$ retention in sunscreen, insect repellant, and sebum (observed at 0.5% strain, 23 °C, 3 days) and at least about 75-139% or at least 80-139% tensile elongation at break $E_{br}$ retention in sunscreen, insect repellant, and sebum (observed at 0.5% strain, 23 °C, 3 days). For example, the disclosed compositions achieve at least 95 % retention of tensile elongation at break ($E_{br}$) in sunscreen (observed at 0.5% strain, 23 °C, 3 days) and at least about 90% or at least about 100% retention $E_{br}$ in insect repellant (observed at 0.5% strain, 23 °C, 3 days). In further examples, the disclosed compositions achieve at least 95 % or at least 98% tensile yield strength $\sigma_y$ retention in sunscreen, insect repellant, and sebum. The disclosed compositions may achieve at least 75 % or at least 77% retention of tensile elongation at break ($E_{br}$) in sebum and at least 90% retention of tensile elongation at break ($E_{br}$) in sunscreen and insect repellant.

As provided herein, compositions of the present disclosure are colorable. Colorable may describe the ease of coloring of the polycarbonate composition. That is, the polycarbonate composition may be sufficiently "light" in color to accept dyes, pigments, or other color treatments/additives that impart a desired hue to the composition. Conventional materials including post-consumer recycled polymers are often dark in color. Values of the present disclosure have certain values for certain color or colorimetric coordinates L*, a*, b*. The "L* value" describes the lightness-darkness property. If the L* value is 0, the object is black. If the L* value is 100 the object is white. The L* value is always positive. Compositions having an L* value further away from the extremes (0 and 100) have a more natural color, which may be the selected color for a specific application or which may enable the composition to be more easily colored. Having values further away from 0 and closer to 100 for L* results in a composition that has a much wider "color space". The "color space" is the range of L* that can be achieved using an optional colorant, pigment and/or dye. L* may be measured using ASTM D2244 With 10 degree observer; International Commission on Illumination (CIE) Standard Illuminant D65 illuminant; specular component included (SCI) reflectance; and large aperture). The disclosed composition may exhibit an L* color value of at least about 70, or at least about 75, or at least about 80 or at least about 90 when measured using a spectrophotometer with D65 illumination in a 10° observer in reflection mode.

These compositions are thus suitable candidates for consumer electronics and enable a critical capability for flame performance and chemical resistance for products with customized color.

The advantageous characteristics of the compositions disclosed herein make them appropriate for an array of uses. In various aspects, the present disclosure provides compositions for use in consumer electronics.

Various combinations of elements of this disclosure are encompassed by this disclosure, for example, combinations of elements from dependent claims that depend upon the same independent claim.

### Definitions

It is also to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a thermoplastic polymer component" includes mixtures of two or more thermoplastic polymer components. As used herein, the term "combination"

is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional processes" means that the additional processes can or cannot be included and that the description includes methods that both include and that do not include the additional processes.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding aspects to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt. % values are based on the total weight of the composition. It should be understood that the sum of wt. % values for all components in a disclosed composition or formulation is 100.

Unless otherwise stated to the contrary herein, all test standards are the most recent standard in effect at the time of filing this application.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, for example, polycarbonate polymers, by methods well known to a person having ordinary skill in the art using molecular weight standards, e.g., polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, for example, polycarbonate polymers, by methods well known to a person having ordinary skill in the art using molecular weight standards, for example, polycarbonate standards or polystyrene standards, preferably certified or traceable molecular weight standards.

As used herein, degree of polymerization, n, may describe the number of monomeric units (or repeating units) in a given polymer molecule.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

In one aspect, "substantially free of" can be less than about 0.5 weight percent (wt. %). In another aspect, substantially free of can be less than about 0.1 wt. %. In another aspect, substantially free of can be less than about 0.01 wt. %. In yet another aspect, substantially free of can be less than about 1200 ppm, less than 1000 ppm, less than 800 ppm, less than 500 ppm, less than 200 ppm, less than 100 ppm. In yet another aspect, substantially free can refer to an amount, if present at all, below a detectable level. In one aspect, the polycarbonate compositions and/or flame retardant additives of the present disclosure are free of or substantially free of halogen.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Aspects of the Disclosure

In various aspects, the present disclosure pertains to and includes at least the following aspects.

Aspect 1. A polycarbonate composition comprising: from 20 wt. % to 95 wt. % of a polycarbonate component comprising one or more of: a virgin polycarbonate homopolymer, and a post-consumer recycled polycarbonate; from 1 wt. % to 20 wt. % of a polycarbonate-polysiloxane copolymer having a siloxane content of from about 30 wt. % to 70 wt. % present in an amount effective to provide 0.5 to 14 wt. % siloxane repeating units based on the total weight of the composition, and a weight average molecular weight of 26,000 to 50,000 grams per mole, as determined by gel permeation chromatography using polystyrene standards and calculated for polycarbonate; and from 0.01 wt. % to 20 wt. % of a flame retardant additive, wherein the flame retardant is free of or substantially free of halogen, and wherein a molded sample of the polycarbonate composition exhibits a UL-94 rating of V-0 at a thickness of 1.5 millimeters or less.

Aspect 2. The polycarbonate composition of aspect 1, wherein the polycarbonate component comprises a mixture of polycarbonate homopolymers.

Aspect 3. The polycarbonate composition of any one of aspects 1-2, wherein the polycarbonate component comprises a polycarbonate homopolymer having a weight average molecular weight of 20,000 grams per mole or more, as determined by gel permeation chromatography using polystyrene standards and calculated for polycarbonate.

Aspect 4. The polycarbonate composition of any one of aspects 1-2, wherein the polycarbonate component

comprises a polycarbonate homopolymer having a weight average molecular weight of 20,000 grams per mole to 35,000 grams per mole, as determined by gel permeation chromatography using polystyrene standards and calculated for polycarbonate.

Aspect 5. The polycarbonate composition of any one of aspects 1-4, wherein the polycarbonate component comprises a mixture of post-consumer recycled polycarbonate from multiple sources.

Aspect 6. The polycarbonate composition of any one of aspects 1-4, wherein the post-consumer recycled polycarbonate is derived from transparent plastic having a light transmittance of greater than 82% at a thickness of 3 mm as determined in accordance with ASTM D1003.

Aspect 7. The polycarbonate composition of any one of aspects 1-4, wherein the post-consumer recycled polycarbonate is a bisphenol A polycarbonate.

Aspect 8. The polycarbonate composition of any one of aspects 1-7, wherein the phosphorous based flame retardant is free of or substantially free of halogen.

Aspect 9. The polycarbonate composition of any one of aspects 1-8, wherein the polycarbonate-polysiloxane copolymer has a weight average molecular weight of 30,000 to 45,000 grams per mole, as determined by gel permeation chromatography using polystyrene standards and calculated for polycarbonate.

Aspect 10. The polycarbonate composition of any one of aspects 1-9, further comprising an additional polycarbonate-polysiloxane copolymer having a siloxane content of from about 0.5 wt. % to 30 wt. % in an amount effective to provide 1 to 25 wt. % siloxane repeating units based on the total weight of the composition.

Aspect 11. The polycarbonate composition of any one of aspects 1-9, wherein the polycarbonate homopolymer comprises: a first polycarbonate homopolymer having a weight average molecular weight of 19,000 to 25,000 grams per mole, as determined by gel permeation chromatography using polystyrene standards and calculated for polycarbonate; or a second polycarbonate homopolymer having a weight average molecular weight of 29,000 to 32,000 grams per mole, as determined by gel permeation chromatography using polystyrene standards and calculated for polycarbonate; or a combination thereof.

Aspect 12. The polycarbonate composition of any one of aspects 1-11, wherein a molded sample of the composition exhibits improved chemical resistance, as tested in accordance with ASTM D543, as compared to a reference composition in the absence of the polycarbonate-polysiloxane copolymer having a siloxane content of from about 30 wt. % to 70 wt. %.

Aspect 13. The polycarbonate composition of any one of aspects 1-12, wherein the flame retardant additive is non-phosphorous based, organic, or inorganic or some combination thereof.

Aspect 14. The polycarbonate composition of any one of aspects 1-12, wherein flame retardant additive comprises bisphenol A diphenyl phosphate.

Aspect 15. The polycarbonate composition of any one of aspects 1-14, wherein the calculated added bromine and added chlorine content of the polycarbonate composition are each about 900 ppm or less and the calculated total added bromine, added chlorine, and added fluorine content of the polycarbonate composition is about 1500 ppm or less; or the calculated added bromine, added chlorine, and added fluorine content of the polycarbonate composition are each about 900 ppm or less and the calculated total added bromine, added chlorine, and added fluorine content of the polycarbonate composition is about 1500 ppm or less.

Aspect 16. The polycarbonate composition of any one of aspects 1-15, wherein the polycarbonate composition comprises 1000 ppm or less of added fluorine based on the total content of the composition.

Aspect 17. The polycarbonate composition of any one of aspects 1-16, wherein the composition further comprises an anti-drip agent.

Aspect 18. The polycarbonate composition of aspect 17, wherein the anti-drip agent comprises an encapsulated fluoropolymer.

Aspect 19. The polycarbonate composition of any one of aspects 1-18, wherein the polycarbonate composition further comprises at least one additional additive, wherein the at least one additional additive comprises an acid scavenger, antioxidant, antistatic agent, chain extender, colorant, de-molding agent, flow promoter, lubricant, mold release agent, plasticizer, quenching agent, flame retardant, ultraviolet (UV) reflecting additive, or a combination thereof.

Aspect 20. The polycarbonate composition of any one of aspects 1-18, wherein the polycarbonate composition exhibits an L* color value of at least 75 when tested in accordance with ASTM D2244.

Aspect 21. An article comprising the polycarbonate composition of any of aspects 1 to 20.

Aspect 22. A method for forming the article according to aspect 21, comprising molding, casting, or extruding the composition to provide the article.

Aspect 23. A method of forming a composition, the method comprising combining to form a mixture from 20 wt. % to 95 wt. % of a polycarbonate component comprising one or more of: a virgin polycarbonate homopolymer, and a post-consumer recycled polycarbonate; from 1 wt. % to 20 wt. % of a polycarbonate-polysiloxane copolymer or a poly(carbonate-siloxane) having a siloxane content of from about 30 wt. % to 70 wt. % present in an amount effective to provide 0.5 to 14 wt. % siloxane repeating units based on the total weight of the composition, and a weight average molecular weight of

26,000 to 50,000 grams per mole, as determined by gel permeation chromatography using polystyrene standards and calculated for polycarbonate; and from 0.01 wt. % to 20 wt. % of a phosphorous based flame retardant, extruding or processing the mixture to form the composition, wherein the combined weight percent value of all components does not exceed 100 wt. %, and all weight percent values are based on the total weight of the composition.

## EXAMPLES

The following examples are put forth so as to provide those of ordinary skill in the art with a complete disclosure and description of how the compounds, compositions, articles, devices and/or methods claimed herein are made and evaluated and are intended to be purely exemplary and are not intended to limit the disclosure. Efforts have been made to ensure accuracy with respect to numbers (for example, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt. %.

There are numerous variations and combinations of mixing conditions, for example, component concentrations, extruder design, feed rates, screw speeds, temperatures, pressures and other mixing ranges and conditions that can be used to optimize the product purity and yield obtained from the described process. Only reasonable and routine experimentation will be required to optimize such process conditions.

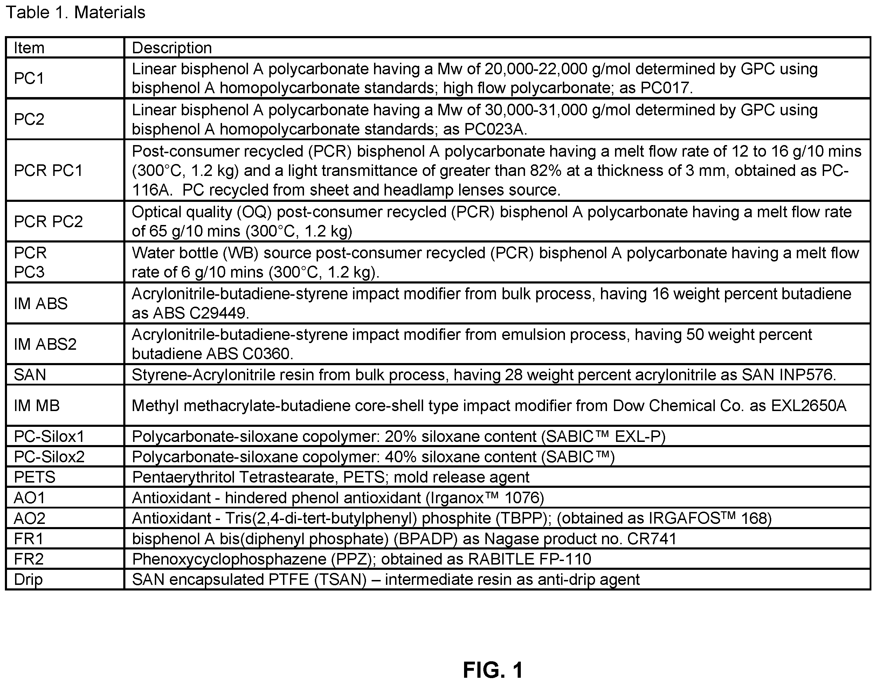

Various compositions were prepared by compounding on a 25 mm twin screw extruder from the raw materials shown in Table 1 (FIG. 1). All materials were blended together and fed by the main feeder. Strands comprising the composition were cut into pellets and dried for further molding and evaluation. All testing was conducted on pellets and molded parts. Compounding was performed on a Coperion W&P ZSK26Mc instrument, and the profiles are shown in Table 2.

**Table 2.** Temperature profiles for compounding

| | Output (kg/hr) | Screw (RPM) | Vacuum (MPa) | Torque (%) | Barrel temp.°C | Die temp. °C |
|---|---|---|---|---|---|---|
| Setting | 70 | 200 | -0.1 | 30 | 180 | 180 |

Injection molding conditions are shown in Table 3. Injection molding was performed on Van Dorn machine with 85-ton clamping pressure with ASTM-family tool.

**Table 3.** Specimen injection molding profile.

| Molding parameters | unit | Value |
|---|---|---|
| Pre-drying time | Hour | 4 |
| Pre-drying temp | °C | 80 |
| Hopper temp | °C | 70 |
| Zone 1 temp | °C | 170-180 |
| Zone 2 temp | °C | 170-180 |
| Zone 3 temp | °C | 170-180 |
| Nozzle temp | °C | 170-180 |
| Mold temp | °C | 50 |

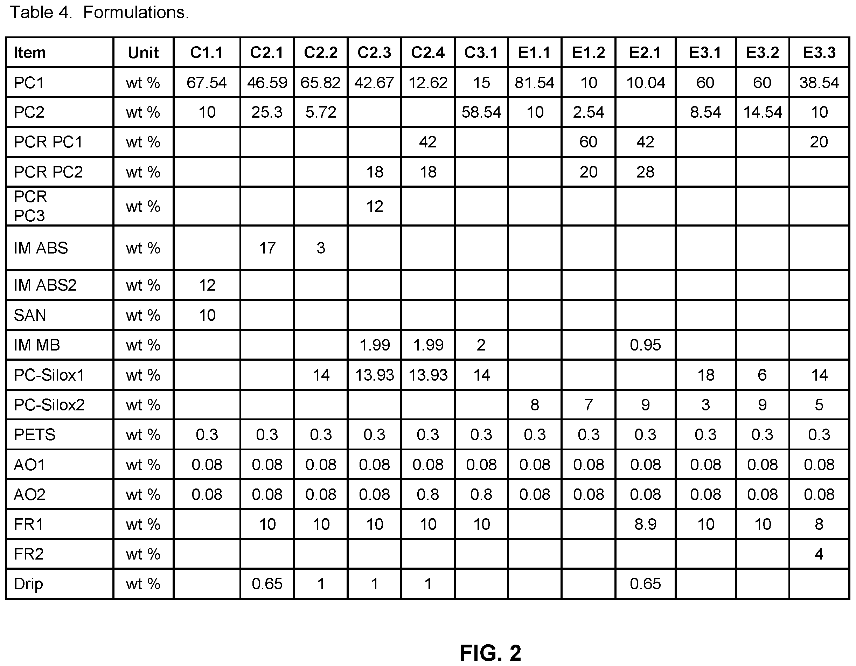

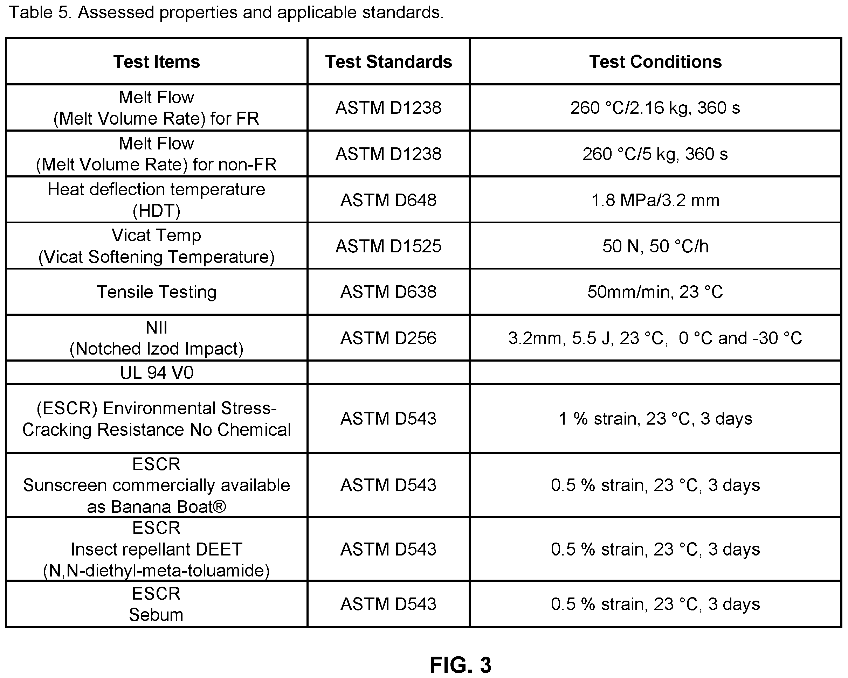

Formulations were prepared as shown in Table 4 (FIG. 2). The samples were evaluated for the following properties shown in Table 5. (FIG. 3)

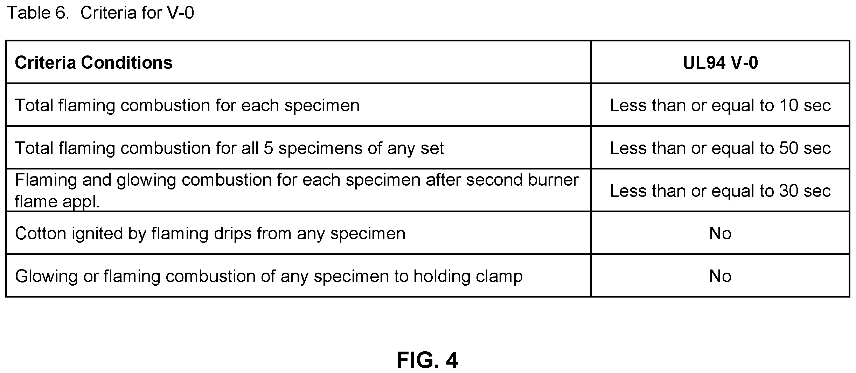

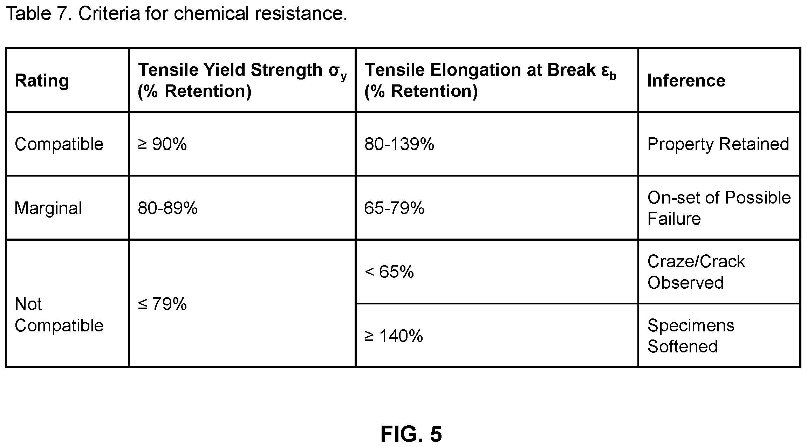

Flammability tests were performed following the procedure of Underwriter's Laboratory Bulletin 94 entitled "Tests for Flammability of Plastic Materials, UL94", which is incorporated herein by reference. According to this procedure, the materials were classified according to the criteria provided herein. A V-0 vertical burn was achieved where burning stopped within 10 seconds after two applications of ten seconds each of a flame to a test bar. No flaming drips were allowed. Criteria conditions for V-0 are also summarized in Table 6 (FIG. 4). Chemical resistance was determined in accordance with the standards presented in Table 5 above. The criteria for chemical resistance are provided in Table 7 (FIG. 5).

The observed properties are presented in Table 8. Thermoplastic compositions with significantly improved environmental stress cracking resistance, better impact strength, and PFAS-free flame retardance, together with good

processability and color-ability were prepared and observed. PC copolymer, PC homopolymer, PCR PC, and BPADP with various loadings have been included in this disclosure. The described formulations exhibited balanced properties of melt characteristics, improved environmental stress cracking resistance, and impact resistance, while maintaining flame resistance and good colorability.

The prepared PC-polysiloxane copolymer compositions showed improved chemical resistance compared with standard PC or standard PC/ABS formulations. These samples exhibited combined improved flame retardance (as well as PFAS free flame retardance) and chemical resistance with good processability and colorability.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

It will be apparent to those skilled in the art that various modifications and variations can be made in the present disclosure without departing from the scope or spirit of the disclosure. Other embodiments of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims. It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

## Claims

**1.** A polycarbonate composition comprising:

a. from 20 wt. % to 95 wt. % of a polycarbonate component comprising one or more of:

i. a virgin polycarbonate homopolymer, and
ii. a post-consumer recycled polycarbonate;

b. from 1 wt. % to 20 wt. % of a polycarbonate-polysiloxane copolymer having a siloxane content of from about 30 wt. % to 70 wt. % present in an amount effective to provide 0.5 to 14 wt. % siloxane repeating units based on the total weight of the composition, and a weight average molecular weight of 26,000 to 50,000 grams per mole, as determined by gel permeation chromatography using polystyrene standards and calculated for polycarbonate; and
c. from 0.01 wt. % to 20 wt. % of a flame retardant additive, wherein the flame retardant is free of or substantially free of halogen, and

wherein a molded sample of the polycarbonate composition exhibits a UL-94 rating of V-0 at a thickness of 1.5 millimeters or less.

**2.** The polycarbonate composition of claim 1, wherein the polycarbonate component comprises at least two different polycarbonate homopolymers.

**3.** The polycarbonate composition of any one of claims 1-2, wherein the polycarbonate component comprises a polycarbonate homopolymer having a weight average molecular weight of 20,000 grams per mole or more, as determined by gel permeation chromatography using polystyrene standards and calculated for polycarbonate.

4. The polycarbonate composition of any one of claims 1-3, wherein the polycarbonate component comprises a mixture of post-consumer recycled polycarbonate from multiple sources.

5. The polycarbonate composition of any one of claims 1-4, wherein the phosphorous based flame retardant is free of or substantially free of halogen.

6. The polycarbonate composition of any one of claims 1-5, further comprising an additional polycarbonate-polysiloxane copolymer having a siloxane content of from about 0.5 wt. % to 30 wt. % in an amount effective to provide 1 to 25 wt. % siloxane repeating units based on the total weight of the composition.

7. The polycarbonate composition of any one of claims 1-6, wherein the polycarbonate homopolymer comprises: a first polycarbonate homopolymer having a weight average molecular weight of 19,000 to 25,000 grams per mole, as determined by gel permeation chromatography using polystyrene standards and calculated for polycarbonate; a second polycarbonate homopolymer having a weight average molecular weight of 29,000 to 32,000 grams per mole, as determined by gel permeation chromatography using polystyrene standards and calculated for polycarbonate; or a combination thereof.

8. The polycarbonate composition of any one of claims 1-7, wherein a molded sample of the composition exhibits improved chemical resistance, as tested in accordance with ASTM D543, as compared to a reference composition in the absence of the polycarbonate-polysiloxane copolymer having a siloxane content of from about 30 wt. % to 70 wt. %.

9. The polycarbonate composition of any one of claims 1-8, wherein the flame retardant additive comprises bisphenol A diphenyl phosphate.

10. The polycarbonate composition of any one of claims 1-9, wherein the calculated added bromine and added chlorine content of the polycarbonate composition are each about 900 ppm or less and the calculated total added bromine, added chlorine, and added fluorine content of the polycarbonate composition is about 1500 ppm or less; or the calculated added bromine, added chlorine, and added fluorine content of the polycarbonate composition are each about 900 ppm or less and the calculated total added bromine, added chlorine, and added fluorine content of the polycarbonate composition is about 1500 ppm or less.

11. The polycarbonate composition of any one of claims 1-10, wherein the composition further comprises an anti-drip agent.

12. The polycarbonate composition of claim 11, wherein the anti-drip agent comprises an encapsulated fluoropolymer.

13. The polycarbonate composition of any one of claims 1-12, wherein the polycarbonate composition further comprises at least one additional additive, wherein the at least one additional additive comprises an acid scavenger, antioxidant, antistatic agent, chain extender, colorant, de-molding agent, flow promoter, lubricant, mold release agent, plasticizer, quenching agent, flame retardant, ultraviolet (UV) reflecting additive, or a combination thereof.

14. The polycarbonate composition of any one of claims 1-13, wherein the polycarbonate composition exhibits an L* color value of at least 75 when tested in accordance with ASTM D2244.

15. An article comprising the polycarbonate composition of any of claims 1 to 14.

Table 1. Materials

| Item | Description |
|---|---|
| PC1 | Linear bisphenol A polycarbonate having a Mw of 20,000-22,000 g/mol determined by GPC using bisphenol A homopolycarbonate standards; high flow polycarbonate; as PC017. |
| PC2 | Linear bisphenol A polycarbonate having a Mw of 30,000-31,000 g/mol determined by GPC using bisphenol A homopolycarbonate standards; as PC023A. |
| PCR PC1 | Post-consumer recycled (PCR) bisphenol A polycarbonate having a melt flow rate of 12 to 16 g/10 mins (300°C, 1.2 kg) and a light transmittance of greater than 82% at a thickness of 3 mm, obtained as PC-116A. PC recycled from sheet and headlamp lenses source. |
| PCR PC2 | Optical quality (OQ) post-consumer recycled (PCR) bisphenol A polycarbonate having a melt flow rate of 65 g/10 mins (300°C, 1.2 kg) |
| PCR PC3 | Water bottle (WB) source post-consumer recycled (PCR) bisphenol A polycarbonate having a melt flow rate of 6 g/10 mins (300°C, 1.2 kg). |
| IM ABS | Acrylonitrile-butadiene-styrene impact modifier from bulk process, having 16 weight percent butadiene as ABS C29449. |
| IM ABS2 | Acrylonitrile-butadiene-styrene impact modifier from emulsion process, having 50 weight percent butadiene ABS C0360. |
| SAN | Styrene-Acrylonitrile resin from bulk process, having 28 weight percent acrylonitrile as SAN INP576. |
| IM MB | Methyl methacrylate-butadiene core-shell type impact modifier from Dow Chemical Co. as EXL2650A |
| PC-Silox1 | Polycarbonate-siloxane copolymer: 20% siloxane content (SABIC™ EXL-P) |
| PC-Silox2 | Polycarbonate-siloxane copolymer: 40% siloxane content (SABIC™) |
| PETS | Pentaerythritol Tetrastearate, PETS; mold release agent |
| AO1 | Antioxidant - hindered phenol antioxidant (Irganox™ 1076) |
| AO2 | Antioxidant - Tris(2,4-di-tert-butylphenyl) phosphite (TBPP); (obtained as IRGAFOS™ 168) |
| FR1 | bisphenol A bis(diphenyl phosphate) (BPADP) as Nagase product no. CR741 |
| FR2 | Phenoxycyclophosphazene (PPZ); obtained as RABITLE FP-110 |
| Drip | SAN encapsulated PTFE (TSAN) – intermediate resin as anti-drip agent |

FIG. 1

Table 4. Formulations.

| Item | Unit | C1.1 | C2.1 | C2.2 | C2.3 | C2.4 | C3.1 | E1.1 | E1.2 | E2.1 | E3.1 | E3.2 | E3.3 |
|---|---|---|---|---|---|---|---|---|---|---|---|---|---|
| PC1 | wt % | 67.54 | 46.59 | 65.82 | 42.67 | 12.62 | 15 | 81.54 | 10 | 10.04 | 60 | 60 | 38.54 |
| PC2 | wt % | 10 | 25.3 | 5.72 | | | 58.54 | 10 | 2.54 | | 8.54 | 14.54 | 10 |
| PCR PC1 | wt % | | | | | 42 | | | 60 | 42 | | | 20 |
| PCR PC2 | wt % | | | | 18 | 18 | | | 20 | 28 | | | |
| PCR PC3 | wt % | | | | 12 | | | | | | | | |
| IM ABS | wt % | | 17 | 3 | | | | | | | | | |
| IM ABS2 | wt % | 12 | | | | | | | | | | | |
| SAN | wt % | 10 | | | | | | | | | | | |
| IM MB | wt % | | | | 1.99 | 1.99 | 2 | | | 0.95 | | | |
| PC-Silox1 | wt % | | | 14 | 13.93 | 13.93 | 14 | | | | 18 | 6 | 14 |
| PC-Silox2 | wt % | | | | | | | 8 | 7 | 9 | 3 | 9 | 5 |
| PETS | wt % | 0.3 | 0.3 | 0.3 | 0.3 | 0.3 | 0.3 | 0.3 | 0.3 | 0.3 | 0.3 | 0.3 | 0.3 |
| AO1 | wt % | 0.08 | 0.08 | 0.08 | 0.08 | 0.08 | 0.08 | 0.08 | 0.08 | 0.08 | 0.08 | 0.08 | 0.08 |
| AO2 | wt % | 0.08 | 0.08 | 0.08 | 0.08 | 0.8 | 0.8 | 0.08 | 0.08 | 0.08 | 0.08 | 0.08 | 0.08 |
| FR1 | wt % | | 10 | 10 | 10 | 10 | 10 | | | 8.9 | 10 | 10 | 8 |
| FR2 | wt % | | | | | | | | | | | | 4 |
| Drip | wt % | | 0.65 | 1 | 1 | 1 | | | | 0.65 | | | |

FIG. 2

Table 5. Assessed properties and applicable standards.

| Test Items | Test Standards | Test Conditions |
|---|---|---|
| Melt Flow (Melt Volume Rate) for FR | ASTM D1238 | 260 °C/2.16 kg, 360 s |
| Melt Flow (Melt Volume Rate) for non-FR | ASTM D1238 | 260 °C/5 kg, 360 s |
| Heat deflection temperature (HDT) | ASTM D648 | 1.8 MPa/3.2 mm |
| Vicat Temp (Vicat Softening Temperature) | ASTM D1525 | 50 N, 50 °C/h |
| Tensile Testing | ASTM D638 | 50mm/min, 23 °C |
| NII (Notched Izod Impact) | ASTM D256 | 3.2mm, 5.5 J, 23 °C, 0 °C and -30 °C |
| UL 94 V0 | | |
| (ESCR) Environmental Stress-Cracking Resistance No Chemical | ASTM D543 | 1 % strain, 23 °C, 3 days |
| ESCR Sunscreen commercially available as Banana Boat® | ASTM D543 | 0.5 % strain, 23 °C, 3 days |
| ESCR Insect repellant DEET (N,N-diethyl-meta-toluamide) | ASTM D543 | 0.5 % strain, 23 °C, 3 days |
| ESCR Sebum | ASTM D543 | 0.5 % strain, 23 °C, 3 days |

**FIG. 3**

Table 6. Criteria for V-0

| **Criteria Conditions** | **UL94 V-0** |
|---|---|
| Total flaming combustion for each specimen | Less than or equal to 10 sec |
| Total flaming combustion for all 5 specimens of any set | Less than or equal to 50 sec |
| Flaming and glowing combustion for each specimen after second burner flame appl. | Less than or equal to 30 sec |
| Cotton ignited by flaming drips from any specimen | No |
| Glowing or flaming combustion of any specimen to holding clamp | No |

FIG. 4

Table 7. Criteria for chemical resistance.

| Rating | Tensile Yield Strength $\sigma_y$ (% Retention) | Tensile Elongation at Break $\varepsilon_b$ (% Retention) | Inference |
|---|---|---|---|
| Compatible | ≥ 90% | 80-139% | Property Retained |
| Marginal | 80-89% | 65-79% | On-set of Possible Failure |
| Not Compatible | ≤ 79% | < 65% | Craze/Crack Observed |
| | | ≥ 140% | Specimens Softened |

FIG. 5

Table 8. Properties observed for comparative samples and inventive formulations.

| Properties | Unit | C1.1 | C2.1 | C2.2 | C2.3 | C2.4 | C3.1 | E1.1 | E1.2 | E2.1 | E3.1 | E3.2 | E3.3 |
|---|---|---|---|---|---|---|---|---|---|---|---|---|---|
| Melt Flow | $cm^3$/10 min | 21.3 | 17.5 | 18.2 | 19.3 | 19.1 | 19.5 | 21.1 | 19.9 | 18.6 | 18.3 | 18.1 | 15.8 |
| HDT | °C | 113 | 87 | 91 | 92 | 91 | 94 | 124 | 121 | 95 | 93 | 93 | 87 |
| Vicat Temp | °C | 133 | 104 | 107 | 106 | 107 | 109 | 142 | 140 | 113 | | | |
| Tensile Modulus | MPa | 2160 | 2550 | 2600 | 2410 | 2510 | 2470 | 2090 | 2130 | 2270 | 2470 | 2470 | 2400 |
| Tensile $\sigma_y$ | MPa | 55 | 63 | 65 | 64 | 65 | 64 | 57 | 59 | 60 | 63 | 63 | 61 |
| Tensile $\varepsilon_b$ | % | 120 | 80 | 120 | 110 | 105 | 115 | 110 | 130 | 120 | 90 | 60 | 100 |
| NII 23 °C | J/m | 574 | 550 | 680 | 670 | 680 | 700 | 723 | 747 | 690 | 760 | 850 | 890 |
| NII 0 °C | J/m | | | 500 | 430 | | 570 | | | 630 | 590 | 650 | |
| NII -30 °C | J/m | 488 | | | | 120 | | 651 | 660 | | | | |
| UL94 V0 | mm | | 0.75 | 0.75 | 0.75 | 1.0 | 3.0 | | | 1.2 | 1.0 | 1.0 | 0.75 |
| Color | L*<br>a*<br>b* | 83.4<br>0.3<br>10.8 | 82.6<br>-2.2<br>6.5 | 86.3<br>-2.1<br>0.3 | 84.4<br>-5.1<br>-2.6 | 88.3<br>-1.5<br>4.1 | | 85.6<br>-2.7<br>-5.5 | 79.9<br>-3.7<br>-5.0 | 89.5<br>-1.9<br>1.9 | | | |
| ESCR No Chemical | $\sigma_y$, % | 100 | 101 | 0 | 0 | | | 100 | 99 | 100 | | | |
| | $\varepsilon_b$, % | 81 | 24 | 2 | 2 | | | 99 | 100 | 92 | | | |
| ESCR Sunscreen | $\sigma_y$, % | | 0 | 0 | 60 | | | 99 | 100 | 100 | | | |
| | $\varepsilon_b$, % | | 0 | 0 | 54 | | | 113 | 103 | 95 | | | |
| ESCR Insect Repellant | $\sigma_y$, % | | 0 | 0 | 100 | | | 98 | 99 | 99 | | | |
| | $\varepsilon_b$, % | | 0 | 0 | 57 | | | 110 | 91 | 103 | | | |
| ESCR Sebum | $\sigma_y$, % | | 99 | 0 | 63 | | | 99 | 101 | 99 | | | |
| | $\varepsilon_b$, % | | 31 | 0 | 40 | | | 114 | 90 | 77 | | | |

FIG. 6

Europäisches Patentamt
European Patent Office
Office européen des brevets

# EUROPEAN SEARCH REPORT

Application Number
EP 23 21 0723

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 015 579 A1 (SHPP GLOBAL TECH BV [NL]) 22 June 2022 (2022-06-22)<br>* page 13, paragraphs 43,59; examples 6-11 *<br>----- | 1-15 | INV.<br>C08L69/00 |
| X,D | WO 2022/107029 A1 (SHPP GLOBAL TECH BV [NL]) 27 May 2022 (2022-05-27)<br>* paragraphs [0054], [0062]; claims 3,9,13; examples 4-9; table 4 *<br>----- | 1-15 | |
| E | EP 4 282 919 A1 (SHPP GLOBAL TECH BV [NL]) 29 November 2023 (2023-11-29)<br>* inventive examples of tables 8-12; claim 1 *<br>----- | 1-3,5-8,<br>13,15 | |

TECHNICAL FIELDS SEARCHED (IPC)

C08L
C09J

The present search report has been drawn up for all claims

1

| Place of search | Date of completion of the search | Examiner |
|---|---|---|
| The Hague | 8 April 2024 | Goulis, Panagiotis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 21 0723

This annex lists the patent family members relating to the patent documents cited in the above-mentioned European search report. The members are as contained in the European Patent Office EDP file on
The European Patent Office is in no way liable for these particulars which are merely given for the purpose of information.

08-04-2024

| Patent document cited in search report | Publication date | Patent family member(s) | Publication date |
| --- | --- | --- | --- |
| EP 4015579 A1 | 22-06-2022 | NONE | |
| WO 2022107029 A1 | 27-05-2022 | CN 116368182 A | 30-06-2023 |
| | | EP 4247890 A1 | 27-09-2023 |
| | | US 2024002657 A1 | 04-01-2024 |
| | | WO 2022107029 A1 | 27-05-2022 |
| EP 4282919 A1 | 29-11-2023 | CN 117126522 A | 28-11-2023 |
| | | EP 4282919 A1 | 29-11-2023 |
| | | US 2023383120 A1 | 30-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7994248 B2
- US 20130313493 A1
- US 9018286 B2
- WO 2019123029 A
- WO 2022107030 A1
- WO 2022107029 A1
- US 7786246 B